# EUROPEAN PATENT APPLICATION

(11) **EP 4 274 063 A1**
(43) Date of publication of application: **08.11.2023**
(21) Application number: 22315091.3
(22) Date of filing: 02.05.2022
(51) Int. Cl.: H02K 3/28, H02K 3/52

(54) **STATOR FOR ELECTRIC MOTOR**

(71) Applicant: Valeo Systèmes d'Essuyage, 78322 Le Mesnil Saint Denis (FR)
(72) Inventor: Herrada, Jose-Luis, 78322 LE MESNIL SAINT DENIS CEDEX (FR); Belhaj, Mehdi, 78322 LE MESNIL SAINT DENIS CEDEX (FR)
(74) Representative: Valeo Visibility

(57) **Abstract**

Stator (110) for a brushless DC electrical motor (100), comprising a stator body with stator windings (150), a plurality of electrical connection elements (300, 300A) establishing an electrical connection between said windings (150), and a support element (305) for retaining said plurality of electrical connection elements (300, 300A), said support element (305) comprising an annular channel (320) into which said plurality of electrical connection elements (300, 300A) are disposed in a plurality of layers, the stator (110) further comprising at least one ring-shaped insulating element (330, 630), each said at least one insulating element (330, 630) presenting a compressional elasticity and interleaved between adjacent layers of the plurality of electrical connection elements (300, 300A).

## Description

### TECHNICAL FIELD

The present invention concerns a stator for an electric motor. More particularly, the present invention concerns an electrical interconnection arrangement for a stator of a brushless electric motor, as well as an electric motor comprising such an arrangement.

### BACKGROUND OF THE INVENTION

Brushless DC electric motors, or simply "brushless motors," are well-known in the art of electric machines; a brushless motor differs from a conventional, brushed electric motor in that the commutation of the different electrical phases is performed electronically, rather than by use of a commutator. Brushless electrical motors have many advantages over traditional electric motors, in that the electronic commutation eliminates the traditional carbon-brush commutator, whose disadvantages are well-known and understood in the art.

Consequently, in a brushless motor, the rotor is configured as a multipole permanent magnet and the stator is configured as a multipole electromagnet. During the operation of the motor, the different poles of the electromagnet are energized and de-energized in a precisely-timed manner.

Since the electromagnets which constitute the poles of the electromagnet must be supplied current individually, or at the very least grouped into phases, the brushless motor must also comprise a complex wiring arrangement so as to ensure that each of the windings of the stator may be fed with current at the right moment. A number of electrical connection elements, generally flexible wires or conductive metallic strips, constitute this arrangement. In the latter case, the strips are collectively referred to as a "leadframe."

Providing these connections in the form of a leadframe is particularly advantageous, in that the resulting electrical connections are more compact and robust, and easier to fabricate, than a wired connection. However, the relatively rigid nature of the metallic strips that constitute the leadframe require that they be installed within the brushless motor with great care to ensure correct positioning; otherwise an impermissible degree of strain may be placed upon the solder joints between the leadframes and the winding wires during operation. This can lead to broken connections and faulty operation of the brushless motor.

Moreover, it is particularly advantageous to provide the leadframes in a stacked arrangement, where successive layers of conductors are superposed, with insulators interleaved therebetween. This is particularly advantageous for its compactness. However, such a stacked arrangement can be particularly problematic in that the stacked dimensional tolerances of the conductors and insulators can cause a great deal of variation in the total height of the stack, yielding a stack of conductors and insulators which has an actual height lesser or greater than its nominal dimensions to a significant degree.

There is thus a need to provide a means for positioning and maintaining the leadframe elements in a desired, correct position within the housing of the brushless motor, and at minimal additional cost, size, or complexity.

It is therefore an object of the invention to provide a stator for a brushless DC electric motor which resolves or ameliorates at least some of the foregoing disadvantages of the brushless motors known in the art.

### SUMMARY OF THE INVENTION

In a first aspect, the invention is directed towards a stator for a brushless DC electrical motor, comprising a stator body comprising a plurality of teeth disposed about an axis of the stator ant a plurality of windings each wound about a respective one of said plurality of teeth; a plurality of electrical connection elements configured to establish an electrical connection between said plurality of winding, each of said electrical connection elements comprising a conductive strip in the form of an arc of a circle; and a support element for retaining said plurality of electrical connection elements, said support element comprising an annular channel into which said plurality of electrical connection elements are disposed in a plurality of layers.

According to the invention, the stator further comprises at least one ring-shaped insulating element, each said at least one insulating element presenting a compressional elasticity and interleaved between adjacent layers of the plurality of electrical connection elements.

Such a configuration is advantageous in that when the assembly of the stack of electrical connection elements and insulating elements into the support element under compression, once assembled the stack of electrical connection elements are pressed together and urged into position by the elasticity of the insulating elements. Consequently, dimensional play is removed, preventing movement of the individual components of the stator during use of the motor when the aggregate actual thickness of the electrical connection elements and insulating elements are less than their nominal dimensions; and accommodating the extra height when the aggregate actual thickness of these components is greater than their nominal dimensions. In addition, the take-up of tolerances by the elasticity of the insulating elements allows them, and the electrical connection elements, to be fabricated with looser tolerances, reducing their cost.

Preferably, an axial face of the at least one insulating element presents a plurality of excrescences protruding in the axial direction and disposed at substantially uniform angular intervals along a circumferential direction of said insulating element.

Such a configuration is advantageous in that the presence of the excrescences will cause the insulating element to favor a bending deformation when the insulating element is compressed in an axial direction; the . This allows for a much greater range of materials to be envisioned for the insulating elements than if the compressional elasticity is required to be in pure compression.

In a preferred embodiment, the axial face of the at least one insulating element has a corrugated or undulating shape, preferably in the form of a sine wave.

In another preferred embodiment, the excrescences are a plurality of radially-oriented ribs.

Preferably, an angular separation between adjacent excrescences is between 20° and 120°, and most preferably between 30° and 90°.

In a possible variant, opposite axial faces of the at least one insulating element each comprise a plurality of excrescences, the excrescences of one of said axial faces being offset along the circumference of the at least one insulating element relative to the excrescences of the opposite of said axial faces.

Such a configuration is particularly advantageous in that it obtains a predictable and manageable degree of compressional elasticity in the insulating element in a simple and easily-fabricated manner.

Preferably, adjacent excrescences along the circumferential direction are disposed on opposite faces of the insulating element.

Such a configuration is particularly advantageous in that, since the excrescences alternate from one side of the insulating element to the other in the circumferential direction, the elastic force exerted by the insulating element is distributed as evenly about the circumference thereof as possible. Consequently, any localized bending deformation in the electrical connection elements is minimized.

In a preferred embodiment, at least one of the plurality of electrical connection elements further comprises at least one retention element extending substantially parallel to the stator axis and engaging the support element such that the electrical connection element is fixedly attached therewith.

This is advantageous in that the barbs or hooks may be fabricated on the electrical connection element comprising the at least one retention element in a fast and simple manner, and permanently lock the retention element to the support element without need of special tools or techniques.

Preferably, the at least one electrical connection element comprising the at least one retention element, when fixedly attached to the support element, retains the plurality of electrical connection elements and insulating elements in compression.

Most preferably, the at least one retention element comprises barbs or hooks.

According to a second aspect, the invention is directed towards an electric motor comprising a stator according to the foregoing.

Such a motor is advantageous in that it realizes at least some of the advantages enumerated above.

### BRIEF DESCRIPTION OF THE DRAWINGS

To further facilitate understanding of the invention, the invention is described by way of example with reference to the accompanying drawings, in which:
Figure 1 is a front perspective view of an electric motor according to a first embodiment of the invention;
Figure 2 is a rear perspective view of the electric motor of Figure 1;
Figures 3A and 3B are perspective views of a leadframe assembly of the electric motor of Figure 1, from the front and rear respectively;
Figures 4A and 4B are perspective and side views, respectively, of an insulating element of the electric motor of Figure 1;
Figure 5 is a section view of a leadframe assembly of the electric motor of Figure 1;
Figures 6A and 6B are side views of an insulating element according to a second embodiment of the invention; and
Figure 7 is an exploded view of the leadframe of Figure 1.

### DETAILED DESCRIPTION

It should be understood that all dimensional references in the following description and attached claims should be interpreted as being relative to the rotational axis of the electric motor. In particular, the term "axial" refers to the direction along or parallel to the rotational axis of the motor, and "radial" refers to a direction perpendicular to the rotational axis of the motor.

Moreover, features described below in relation to one of the embodiments should be considered as applicable to all of the embodiments, to the extent that such broad application is not contradictory.

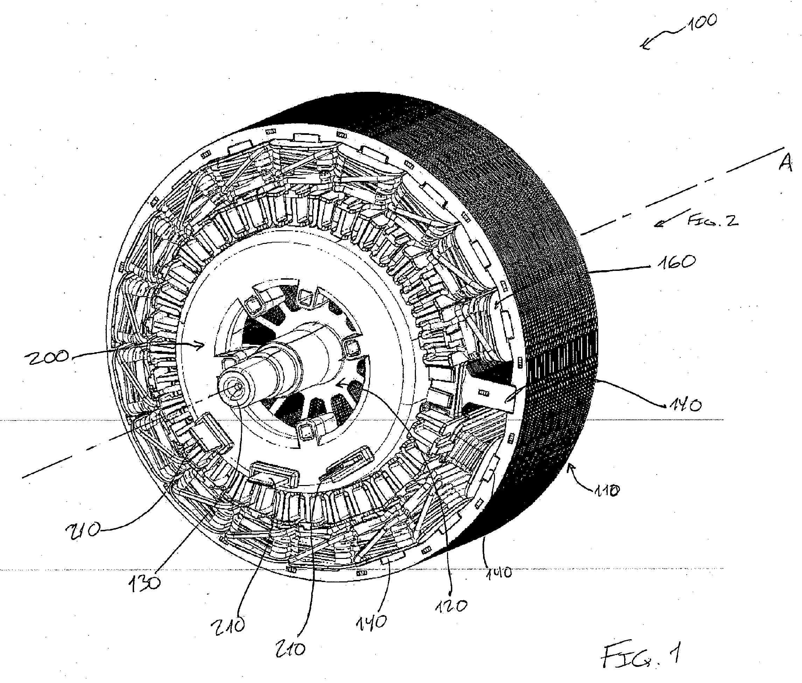

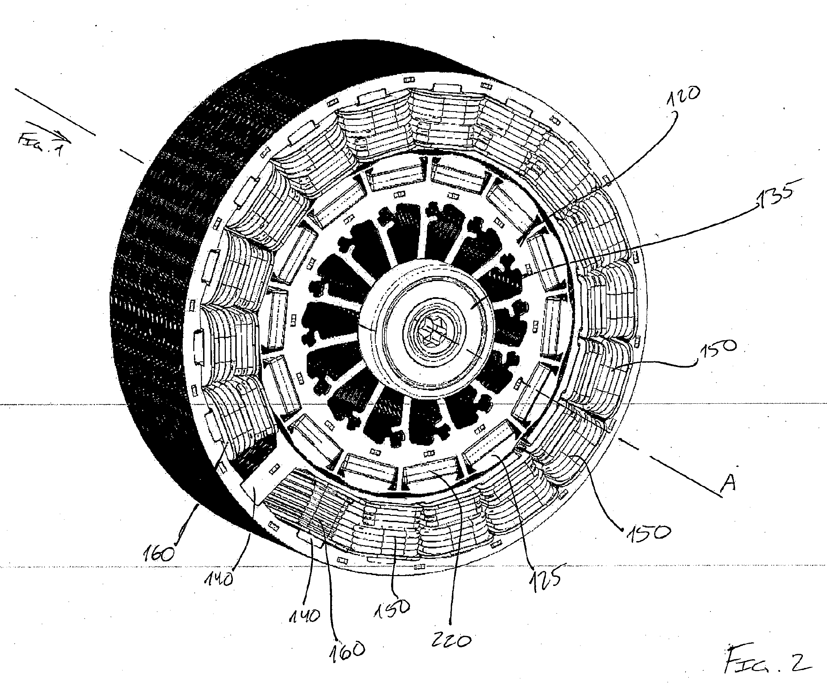

The basic structure of an exemplary brushless DC electric motor according to the present invention will be discussed in relation to Figures 1 and 2. Figure 1 illustrates a brushless electric motor 100 according to the invention, comprising a stator 110 and a rotor 120 bearing a motor shaft 130 mounted on at least one bearing 135. Figure 2 illustrates this same motor 100, but viewed from a reverse angle. As certain elements may be more easily identified from one view than the other, unless otherwise noted the following discussion applies equally to Figures 1 and 2.

The stator 110, rotor 120, and motor shaft 130 are constructed with radial symmetry about the rotational axis A of the motor, notably to ensure correct rotational balance during operation. One may therefore consider that the "stator axis" and "rotor axis," *i.e*. the axes of rotational symmetry of each of these components, are one and the same, coincident with the rotational axis A of the motor. For the sake of simplicity, the following discussion will refer only to the rotational axis A as noted in Figures 1 and 2.

The stator 110 comprises a plurality of stator teeth 140, of which only some are indicated in Figure 1 for clarity. The stator teeth 140 are disposed about the circumference of the stator 110, at equal angular intervals, and extend radially inwards towards the rotational axis A of the electrical motor 100. However, other configurations of motors employ the inverse configuration, where the stator teeth 140 extend outwardly from the rotational axis A.

Around each of the stator teeth 140 is wound a stator winding 150. Between each stator winding 150 and a respective stator tooth 140 is disposed a stator insulator 160; the stator insulator serves to prevent short circuiting between the stator tooth 140 and the stator winding 150, and to retain the stator winding 150 in place generally. When the stator winding 150 is energized, the stator winding 150 and stator tooth 140 generate an electric field, thus constituting a pole of the stator 110.

While not all of the stator teeth 140 illustrated in Figures 1 and 2 are provided with a stator winding 150 and/or stator insulator 160, this is done merely for illustration; when the motor 100 is in operational condition all of the stator teeth will comprise respective stator insulators and stator windings.

The rotor 120 comprises a rotor body 125 constituted by a stack of individual laminae, which are preferably cut or stamped from sheets of silicon steel and bound together to form a generally cylindrical shape. The rotor 120 further comprises a plurality of permanent magnets 220, disposed along the circumference of the rotor 120 to as to form individual rotor poles. When the rotor 120 is disposed coaxially within the stator 110, the poles of the rotor 120 face the poles of the stator 110. By energizing and de-energizing the stator windings 150 in a controlled manner, the rotor 120 is made to spin.

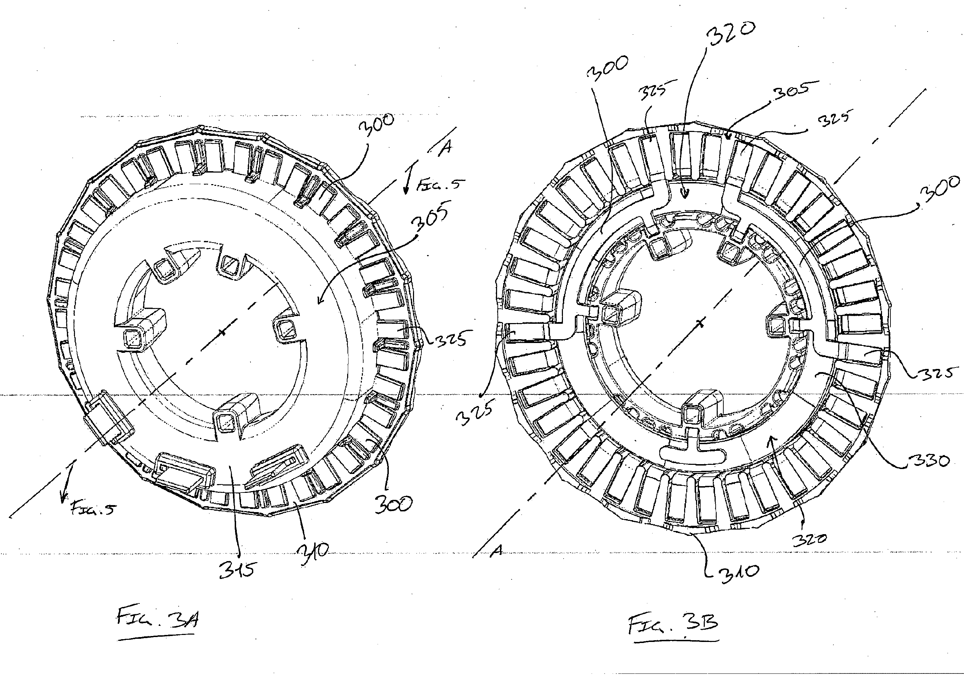

In order to provide electrical power to each of the stator windings 150 in a controllable manner, the stator 100 is further provided with a leadframe assembly 200, which will be discussed briefly in relation to Figures 1 and 2 and in detail further below. The leadframe assembly 200 comprises a plurality of electrical connection elements (discussed in further detail below with respect to Figs. 3A, and 3B *et seq.),* which connect the individual poles of the stator 110, *i.e.* the stator windings 150, into a plurality of phases, which may be selectively energized; generally speaking the stator will present three phases, designated U, V, and W. The leadframe assembly 200 also comprises the terminals 210, which correspond to the U, V, and W phases of the stator 110. The exact electrical schema for connecting the different stator windings 150 will be easily determined by the skilled person and will not be discussed here.

Figures 3A and 3B illustrate in detail the leadframe assembly 200 of Figures 1 and 2, from front and back sides, respectively; the rotor and stator are removed for the sake of clarity.

In order to properly terminate each of the ends of each of the stator windings 150 to the correct terminals 210, the leadframe assembly comprises a series of electrical connection elements 300, which are housed in the support element 305.

The support element 305 is a globally disc-shaped structure, comprising a rim portion 310 and a hub portion 315. The hub portion 315 defines an annular channel 320, into which the electrical connection elements 300 are installed.

The electrical connection elements 300 are disposed such that a portion thereof, the tabs 325, protrude from the hub portion 315 and onto the rim portion 310. The tabs 325 are configured such that each end of the stator windings 150 is attached to a corresponding one of the tabs 325, thereby establishing an electrical connection.

As can be seen in Figure 3B, the electrical connection elements 300 are configured such that their respective tabs do not necessarily connect adjacent stator windings 150; rather, the electrical connection elements are preferably provided in the form of an arc of a circle, extending over a portion of the diameter of the annular channel 320 in the hub portion 315.

It will naturally be understood that any individual one of the electrical connection elements 300 may extend in the annular channel 320 about the axis A over a greater or lesser angular extent, depending on which of the stator windings it is meant to connect. The form of the electrical connection elements300 illustrated in Figures 3A and 3B should therefore not be construed as limiting, but merely exemplary.

Consequently, there are provided several layers of electrical connection elements 300, which are separated by interleaved insulating elements 330, of which one is visible in Figure 3B. The insulating elements 330 are ring-shaped, such that they are accommodated in the annular channel 320 between successive layers of electrical connection elements 300.

The electrical connection elements are preferably fabricated from a conductive metal, and preferably one with satisfactory electrical properties for the specific operating conditions envisaged for the motor. For instance, metals such as brass, copper, or spring steel might be envisioned. It may also be desirable to furnish the electrical connection elements as a plated metal component, so as to combine the conductive properties of one metal with the mechanical properties of another (for instance, spring steel plated with silver).

The insulating elements 330 may be formed from any of a number of electrically-insulating materials, for instance cork, rubber, phenolic, polyamide, polyimide, or other such materials which present the required insulating capacity and elasticity in response to compressive force.

The electrical connection elements 300 and the insulating elements 330 are thus disposed in the annular channel 320 of the hub portion 315 and retained in place by a compressive force. This compressive force may be exerted by pressing the stator body 200 or other components of the motor against the leadframe assembly 200, or by retention elements which will be described in further detail below.

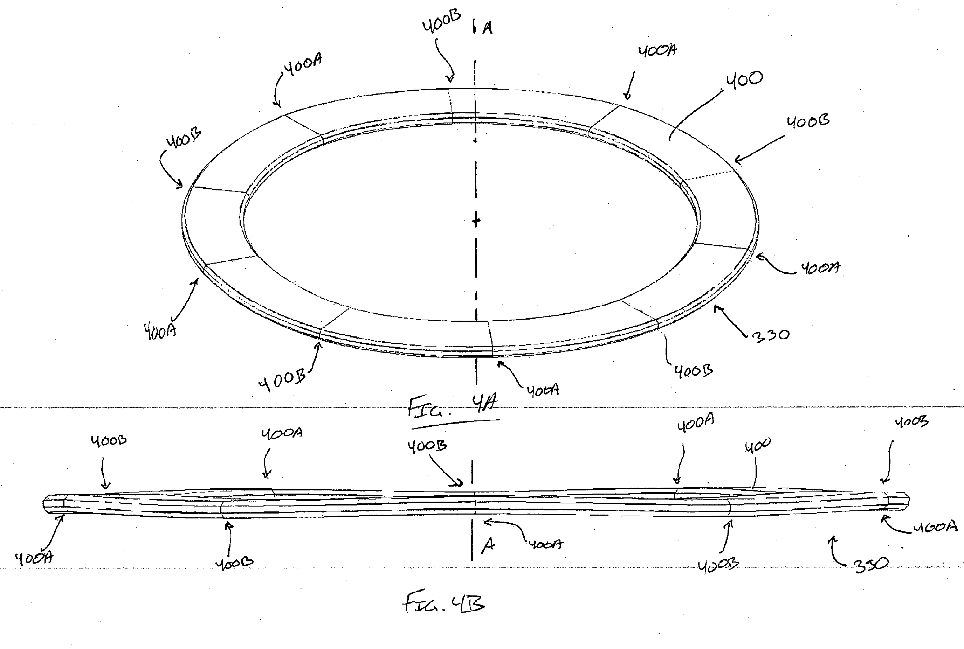

Figures 4A and 4B illustrate an exemplary insulating element 330, in a perspective and side view respectively. In particular, it can be seen how the insulating element has an undulating, sinusoidal shape along the circumferential direction about the axis A. The face 400 of the insulating element 330 thus presents a series of excrescences, in the form of the alternating peaks 400A and valleys 400B disposed at substantially uniform angular intervals.

In this particular embodiment, there are a total of ten peaks and valleys 400A, 400B, distributed substantially uniformly about the circumference of the insulating element 330. In a more general sense, the angular separation between elements will vary according to the number of excrescences and whether they are evenly distributed or not; in this case, the ten excrescences 400A, 400B are each separated by a 36° angle; separation angles of between 20° and 120° may be envisioned, but ideally a separation of between 30° and 90° obtains the best results.

In this manner, the insulating element 330 constitutes a type of wave spring. It will be remarked in particular that a peak 400A on one side of the insulating element 330 is coincident with a valley 400B on the other side, and vice versa; in this manner the compressive elasticity of the insulating element may be optimized.

Moreover, it may be preferable, in order to control the deformation of the electrical connection elements, to align some or all contiguous layers of the insulating elements such that their excrescences are aligned, or alternately such that their excrescences are offset by a certain degree relative to one or both of the insulating elements in contiguous layers.

The skilled person will be readily capable of determining both the dimensions and the material properties for the elements of the leadframe assembly, and the preferred assembly orientation thereof, to achieve an ideal result in terms of compressive force and component retention within the support element.

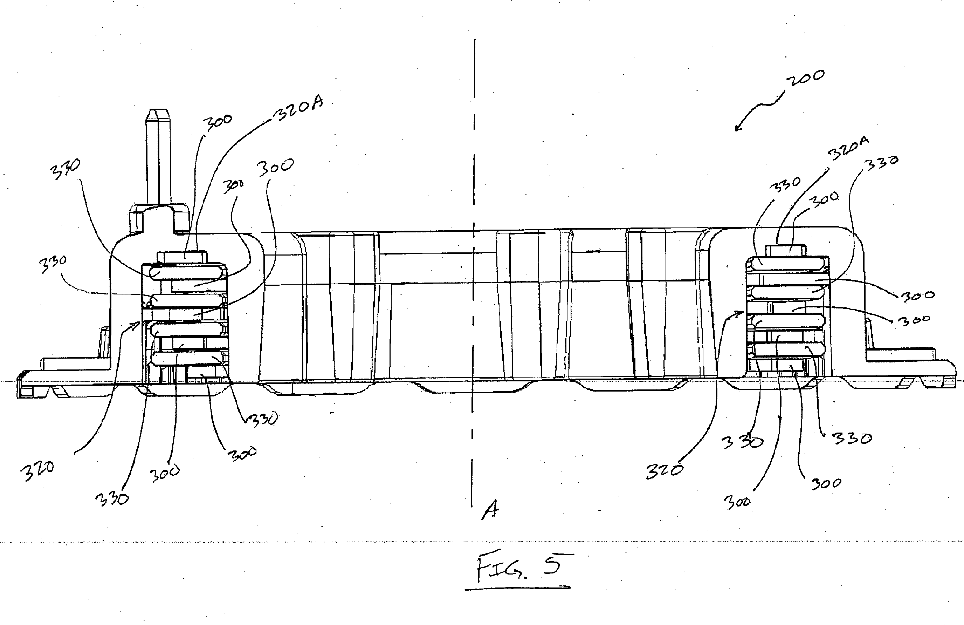

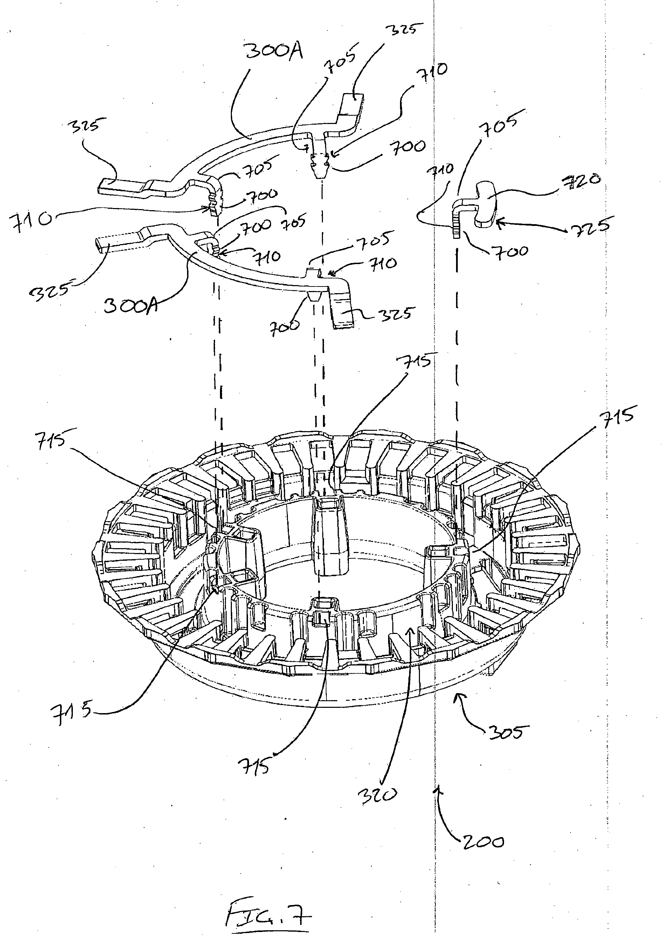

Figure 5 is a sectioned view of the leadframe assembly 200, which illustrates how the conductive electrical connection elements 300 and the insulating elements 330 are positioned in the annular channel 320 of the support element 305. A first electrical connection element 300 is disposed against the bottom 320A of the annular channel 320, as shown. Successive, alternating layers of insulating elements 330 and electrical connection elements 300 are then disposed in the annular channel 320 in a stacked arrangement, thereby constituting the leadframe. Optionally, at retention element may be provided to maintain this stacked arrangement in position; one example of such is discussed below in relation to Figure 7.

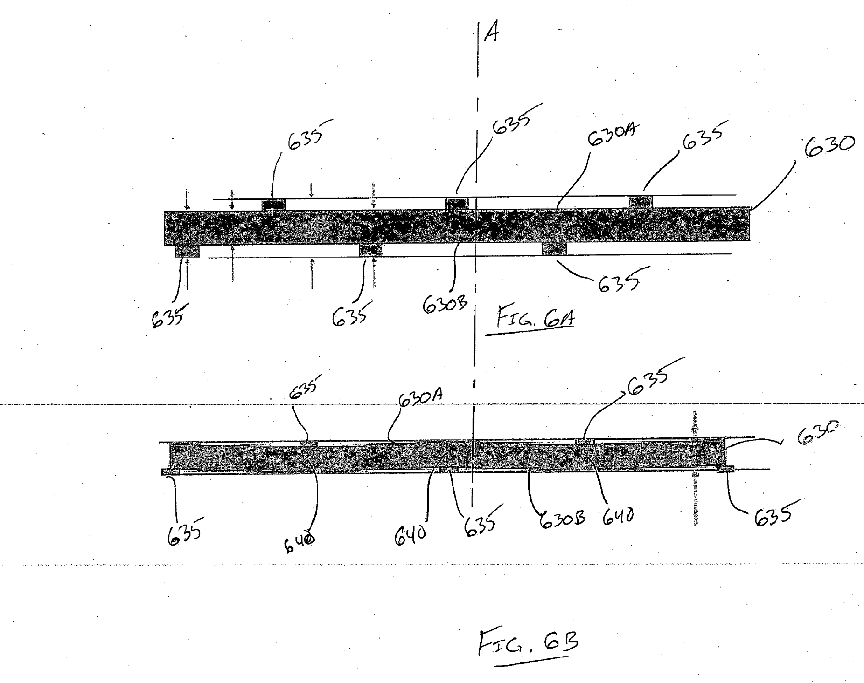

Figures 6A and 6B are a schematic representation of an insulating element 630 according to a second embodiment of the invention. In this embodiment, the insulating element 630 is provided with a series of ribs 635 disposed on the axial faces of the insulating element 630, oriented in a substantially radial direction so as to run across the insulating element 630. In its relaxed state, as depicted in Figure 6A, the insulating element 630 is substantially flat, save for excrescences in the form of the ribs 635 which project from its two faces 630A, 630B.

In this particular embodiment the ribs 635 are disposed at equal angular intervals about the circumference of the insulating element 630; such is advantageous in that it ensures a uniform deformation in the insulating element 600 and thus a uniform distribution of the compressive force about its circumference. However, other distributions may be envisioned where a particular distribution of force is desired.

Figure 6B illustrates the insulating element 630 when it is subjected to a compressive force along the axis A. The ribs 635 are offset from one another, such that consecutive ribs 635 alternate from the face 630A to face 630B; this has the effect of inducing the insulating element 630 to deform in the circumferential direction in the undulating, "zig-zag" manner depicted in Figure 6B.

In particular, the deformations will be concentrated at the inflection points 640, where the insulating element 630 is induced to bend by the presence of the rib 635; the collective action of each of these bending deformations yields, in the aggregate, a compressive elasticity in the insulating element 630.

It should be noted that the excrescences of the insulating element this embodiment need not necessarily be in the form of radially-oriented ribs, as depicted in Figure 6B. Other forms such as bumps or indentations may be equally envisioned.

Figure 7 is an exploded view of a leadframe assembly 200; a number of components, including the insulating elements and most of the electrical connection elements, are omitted for clarity. Figure 7 depicts the last, most distal of the electrical connection elements 300, here noted as electrical connection elements 300A. The electrical connection elements 300A in this layer are distinguished from those in other, more proximal layers, in that they are further provided with at least one retention element 700.

Each at least one retention element 700 extends from its respective electrical connection element 300A in a substantially axial direction (the axis A is omitted here for clarity but is oriented in the same manner as in the preceding Figures). Each retention element 700 is ideally formed integrally with its respective electrical connection element 300A; for instance, in the embodiment depicted in the Figures, the retention elements 700 are formed in one piece with the electrical connection elements 300 in a metalworking step (e.g. stamping) and are connected therewith by a neck 705, which is subsequently bent so as to place the retention element 700 in a desired alignment.

The retention elements 700 further comprise a locking means 710, which permanently lock the retention element 700, and consequently the electrical connection element 300A, to the support element 305. In the exemplary embodiment depicted in Figure 7 the locking means 710 is a series of barbs; other permanent or semi-permanent mechanical attachment means such as hooks, clips, snaps, or the like may equally be envisioned.

When the electrical connection element 300A is put into place in the annular channel 320 of the support element 305, each retention element 700 is inserted into a corresponding pocket 715 formed in the support element 305. The locking means 710 will interlock with the pocket 715 (in this case, the barbs of the locking means biting into the material of the support element 305), retaining the electrical connection elements 300A in place.

As the electrical connection elements 300A are the last, most distal of the layers of electrical connection elements 300 to be installed, they will serve to retain the entire stack of electrical connection elements 300 and insulating elements 330 in place. Moreover, by controlling the depth to which the retention elements 700 are inserted into the pockets 715, the compression of the stack of electrical connection elements 300 and insulating elements 330 may be controlled; and by controlling this compression the deformation of the insulating elements 330, and ultimately the force exerted by each of the insulating elements 330 on the rest of the stack, is also controlled.

Figure 7 also illustrates a possible variant, which may be employed in complement to the retention elements 700 on the electrical connection elements 300A, in the form of the clamping element 720. The clamping element 720 is essentially an electrical connection element that makes no electrical connection: it comprises a short clamping portion 725 and a neck 705 leading to a locking means 710.

The clamping element may be attached to the supporting element 305, in the same manner as the electrical connection elements 300A, bringing a clamping and retaining effect to the stack of electrical connection elements and insulating elements supplemental to that obtained by the electrical connection elements 300A. In this manner, the integrity of the stator assembly 200 is further improved.

Finally, it should be noted that the invention as described by the foregoing is not limited by the specific means and configurations illustrated and described in the present specification, but rather applies equally to any equivalent or substitute means or configurations, and any combination thereof.

### LIST OF REFERENCE SIGNS

- 100: Electric Motor
- 110: Stator
- 120: Rotor
- 125: Rotor Body
- 130: Motor shaft
- 135: Bearing
- 140: Stator Teeth
- 150: Stator Winding
- 160: Winding Insulator
- 200: Leadframe Assembly
- 210: Terminals
- 220: Permanent magnets
- 300, 300A: Electrical Connection Elements
- 305: Support Elements
- 310: Rim Portion
- 315: Hub Portion
- 320: Annular Channel
- 320A: Bottom (of Annular Channel 320)
- 325: Tabs
- 330, 630: Insulating Elements
- 400, 630A, 630B: Faces
- 400A: Peak
- 400B: Valley
- 635: Rib
- 700: Retention Elements
- 705: Neck
- 710: Locking Means

## Claims

1. Stator (110) for a brushless DC electrical motor (100), comprising
- a stator body comprising a plurality of teeth (140) disposed about an axis (A) of the stator (110) and a plurality of windings (150) each wound about a respective one of said plurality of teeth (140);
- a plurality of electrical connection elements (300, 300A) configured to establish an electrical connection between said plurality of windings (150), each of said electrical connection elements (300, 300A) comprising a conductive strip in the form of an arc of a circle; and
- a support element (305) for retaining said plurality of electrical connection elements (300, 300A), said support element (305) comprising an annular channel (320) into which said plurality of electrical connection elements (300, 300A) are disposed in a plurality of layers;
**characterized in that** the stator (110) further comprises at least one ring-shaped insulating element (330, 630), each said at least one insulating element (330, 630) presenting a compressional elasticity and interleaved between adjacent layers of the plurality of electrical connection elements (300, 300A).

2. The stator (110) according to claim 1, wherein an axial face (400, 630A, 630B) of the at least one insulating element (330, 630) presents a plurality of excrescences (400A, 400B, 635) protruding in an axial direction and disposed at substantially uniform angular intervals along a circumferential direction of said insulating element (300, .

3. The stator (110) according to claim 2, wherein the axial face (400) of the at least one insulating element (330) has a corrugated or undulating shape, preferably in the form of a sine wave.

4. The stator (110) according to claim 2, wherein the excrescences (635) are a plurality of radially-oriented ribs.

5. The stator (110) according to any one of claims 2 to 4, wherein an angular separation between adjacent excrescences (400A, 400B, 635) is between 20° and 120°, and preferably between 30° and 90°.

6. The stator (110) according to any one of claims 2 to 5, wherein opposite axial faces (400, 630A, 630B) of the at least one insulating element each comprise a plurality of excrescences (400A, 400B, 635), the excrescences (400A, 400B, 635) of one of said axial faces (400, 630A, 630B) being offset along the circumference of the at least one insulating element (330, 630) relative to the excrescences (400A, 400B, 635) of the opposite of said axial faces (400, 630A, 630B).

7. The stator (110) according to the preceding claim, wherein adjacent excrescences (400A, 400B, 635) along the circumferential direction are disposed on opposite faces (400, 630A, 630B) of the insulating element (330, 630).

8. The stator (110) according to any one of the preceding claims, wherein at least one of the plurality of electrical connection elements (300A) further comprises at least one retention element (700) extending substantially parallel to the stator axis (A) and engaging the support element (305) such that the electrical connection element(300A) is fixedly attached therewith.

9. The stator (110) according to the preceding claim, wherein the at least one electrical connection element (300A) comprising the at least one retention element (700), when fixedly attached to the support element (305), retains the plurality of electrical connection elements (300, 300A) and insulating elements (330, 630) in compression.

10. The stator (110) according to claim 8 or 9, wherein the at least one retention element (700) comprises barbs or hooks.

11. An electric motor (100) comprising a stator (110) according to any one of the preceding claims.
